# EUROPEAN PATENT APPLICATION

(11) **EP 1 707 825 A2**
(43) Date of publication of application: **04.10.2006**
(21) Application number: 06075753.1
(22) Date of filing: 28.03.2006
(51) Int. Cl.: F16B 7/04, E04B 1/19

(54) **Node element for joining structures made of tubes**

(30) Priority: 31.03.2005 GB 0506513
(71) Applicant: L & L Products, Inc., Romeo, MI 48065 (US)
(72) Inventor: Meyer, Francis, Core Products, 67129 Molsheim Cedex (FR); Bieber, Serge, Core Products, 67129 Molsheim Cedex (FR); Muteau, Stephane, Core Products, 67129 Molsheim Cedex (FR)
(74) Representative: Bawden, Peter Charles

(57) **Abstract**

Improved means for joining tubular structures are provided which consist of a plug (1) for insertion into the tubular structure provided with a plurality of attachment points which can be used to link one or more tubes the plug is provided with a rim (2) of greater cross section that the internal cross section of the tubular structure to control the extent to which the plug can enter the structure.

## Description

The present invention relates to improvements in or relating to joints and in particular to means for joining tubular structures. Tubular structures of varying cross sections are used in a wide range of activities often to provide strength at relatively lightweight. Examples of the use of such structures are in the construction and transportation industries such as in scaffolding, light weight structure in automobiles, trucks and busses to provide reinforcement, hand rails and the like. Other uses are in aircraft including lightweight flying machines such as unmanned surveillance aircraft, microlights, gliders and the like.

In many uses of tubular structures it is necessary to join two or more tubular structures together to form the finished article. In many applications it is necessary that the joint be rigid. Various techniques are known for the joining of tubular structures depending upon the nature of the materials from which the structures are made and the nature of the finished article to be produced.

Joining the structures can however be one of the more difficult aspects of the production of a tubular structure and in particular it can add undesirable weight to the overall structure, it can also provide a point of weakness in a structure perhaps causing a potential safety hazard.

The present invention therefore aims to provide a simple to use, lightweight joint device which may be used to join together articles of tubular cross section and which, when required, brings rigidity to the joint.

The present invention therefore provides a means for joining tubular structures comprising a plug for insertion into the tubular structure provided with a collar to limit the extent to which the plug may be inserted into the tubular structure the plug being provided with a head adapted to be positioned outside of the tubular structure when the plug is inserted within the structure the head being provided with a plurality of holes which can be aligned with corresponding holes in a multi armed joining piece whereby two or more plugs can be connected to two or more arms of the joining piece by the provision of pins through the mating holes to form a joint between two or more tubular structures into which the plugs have been placed.

The plug is preferably provided with a central hole surrounded by a ring of usually smaller holes and the joining piece is provided with a matching set of holes. The plug and the joining piece may thus be linked by a pin passing through the central holes in a way that they may be rotated relative to each other. The provision of a plurality of holes in the head of the plug and in each arm of the joining piece allows different positions for attachment of the plug to the joining piece and the use of a plurality of holes enables the rigidity of the joint to be improved. In this way by selection of the appropriate holes the relative angle of inclination of the tubular members can be realised and varied to enable the desired overall structure to be produced. The number of holes used will depend upon the nature of the joint to be made. However we have found that 6 or preferably 8 holes uniformly distributed around the circumference of a circle is particularly useful. Such a structure is versatile in that joints may be created at various angles as may be required.

In a preferred embodiment the plug is provided with a slot at the end opposite to the end that is to be inserted into the tube and the two limbs that define the slot are both provided with the holes. In this embodiment the plug may be slid over an arm of the joining piece so that the arm, provided with holes designed to match those provided in the limbs which define the slot in the plug, fits within the slot and can be retained therein by passing pins through the holes. This allows greater rigidity in the joint to be accomplished.

In another embodiment the invention provides the plugs as previously described.

In a further embodiment the present invention comprises a kit for the assembly of tubular structures comprising two or more plugs as already described together with at least one joining piece as already described. It will be appreciated that the overall structures that are being produced may be based on a large number of joined tubular structures such as in scaffolding, handrails in busses and trains, the structures of automobiles and light aircraft. In this instance a large number of joints between the tubular structures will need to be produced.

The techniques of the present invention may be used to join tubular structures of any cross section. The structure may be rectangular, hexagonal or circular in cross section or may have any other cross section. However the invention is particularly concerned with joining together tubes of substantially circular cross section. The cross section of the plug section of the joining piece will correspond to the cross section of the tubular structures that are to be joined. The techniques of the present invention may, if desired, be used to join together tubular sections of differing cross sections in which case the joining system will involve plugs of differing cross sections to match the different cross sections of the tubular structures.

In a preferred embodiment the joining systems of the present invention are used with laminar tubular structures comprising a sandwich of foam between two concentric tubes. In a special feature of this embodiment the foam is produced by heating a sandwich structure containing the foamable material in the unfoamed state. Here the plug section of the joining piece may serve the additional function of holding the concentric tubes apart by the distance corresponding to the desired thickness of the foam. In this embodiment the plug may be provided with two collars one corresponding to the diameter of the inner of the two concentric tubes and the other corresponding to the diameter of the outer of the two concentric tubes. In this way the plug may be inserted into the inner of the concentric tubes but the first collar will not pass into the inner tube but will pass into the outer of the two concentric tubes thus holding the two tubes apart by a distance defined by the width of the collar. If such a plug is inserted into each end of the concentric tubular structure the plugs will serve to hold the tubes apart by the required distance to enable the desired thickness of foam to be produced.

In this embodiment the foam may be such that it is heat expandable and may be provided between the concentric tubes in an unfoamed state. The plug may be positioned within the concentric tubular structure which may then be heated to cause foaming. In this way the plug can hold the concentric tubes apart and ensure that a foamed layer of desired thickness is obtained along the length of the tube. This technique is particularly preferred when the foam is a reinforcing foam that adds strength to the tubular structure. Particularly preferred are the epoxy based structural foams which will foam, cure and also adhere to the surfaces of the concentric tubes. Examples of foamable materials from which such foams can be produced are blends of epoxy resins and thermoplastic rubbers and/or elastomers containing blowing agents and agents for curing the epoxy resins. The formulations may also contain fillers and other reinforcing materials.

In a further embodiment of the invention the inner tube is slightly shorter than the outer of the concentric tubes so that there can be direct contact between the plug and the foamable material when the plug is inserted into the tubular structure. The adhesive properties of the foamable material as it expands can then bond the foam to the plug so retaining the plug firmly within the tubular structure and providing further rigidity to the joint.

In another embodiment the plugs may be provided with a recess on one or both sides the shape of the recess corresponding to the external shape of the tubular structures that are being joined. In this way the plug may be fitted around one of the tubular pieces even although it may not be used to join that particular piece which may be useful when the overall structure is complex and involves overlapping tubular elements.

A hole may be provided in the recessed area of the plug which could match with a hole in the tubular piece to allow for passage of an attachment means such as a bolt or a pin.

The plugs that are used in the present invention may be made of any suitable material. However given the complexity of their shape it is preferred that they be made by injection moulding, although they may be made by machining. It is therefore preferred that they be made from an injection mouldable material that provides adequate strength for the ultimate tubular structure. Examples of suitable materials including injection mouldable thermoplastics such as rigid polyvinyl chloride, polypropylene and polyamides. In a preferred embodiment the thermoplastics are fibre filled, filled polyamide particularly glass filled nylon is preferred. In the embodiment of the invention where the plugs are used with concentric tubes to also allow foaming of a foamble material positioned between the concentric tubes the plug should be of a material that is not deleteriously affected by the conditions used to effect foaming. For example if the foaming is effected by heat the plug should be made of a material that does not melt at the temperature required to cause the foaming. The plugs may also be made of metals such as aluminium and the zinc alloy zamac.

The joining pieces may also be made of any suitable material which may or may not be the same material as the plugs. The joining pieces may be of metal such as aluminium, steel or the zinc alloy such as zamac or may be of thermosetting or thermoplastic material. The joining pieces will be shaped according to the structure to be produced and will contain arms that protrude in the direction in which the tubular structures that are to be joined should extend. For example the joining section may be flat with two or more extending arms for joining structures that are to lie in the same plane. Alternatively the arms of the joining pieces may be inclined to each other so that the tubular sections adopt the inclination required in the final structure. In one embodiment the piece my be provided with three arms two in one plane and the third in the plane vertical to the plane occupied by the other two arms. In this way a corner joint may be formed.

The joining technique of the present invention can have widespread use in any activity which requires tubular members to be joined to provide an overall structure comprising a plurality of tubular members. For example the techniques may be used to join tubular scaffolding such as that employed in the construction industry, they may be used to join tubular materials such as that used in the transport industry such as handrails in busses and trains. It may also be used to join together the tubular structures used in light aviation such as flying robots, microlights or gliders. As well as providing simple to use light weight joints the joining systems of the present invention have the additional benefit that they can be readily dismantled and reconstructed or replaced as may be required.

The present invention is illustrated but in no way limited by the accompanying drawings in which
Figure 1 shows a plug according to the present invention useful with a tubular structure comprising two concentric tubes containing a foamable material.
Figure 2 shows a planar connecting piece according to the present invention.
Figure 3 shows a connecting piece suitable for forming a rectangular joint between three tubular members.
Figure 4 shows the use of the connecting piece of Figure 2 in an embodiment in which one of the plugs is also used to bridge part of the tubular structure.
Figure 5 shows a rectangular corner that has been established by the use of a connecting piece as shown in Figure 3 together with three plugs inserted into three tubular structures.
Figure 6 is a cut away view showing a plug positioned within two concentric tubes containing a foamable material with the inner tube being shorter than the outer tube.
Figure 7 shows how a recess may be provided in a plug to enable it to lie in contact with a tubular member.

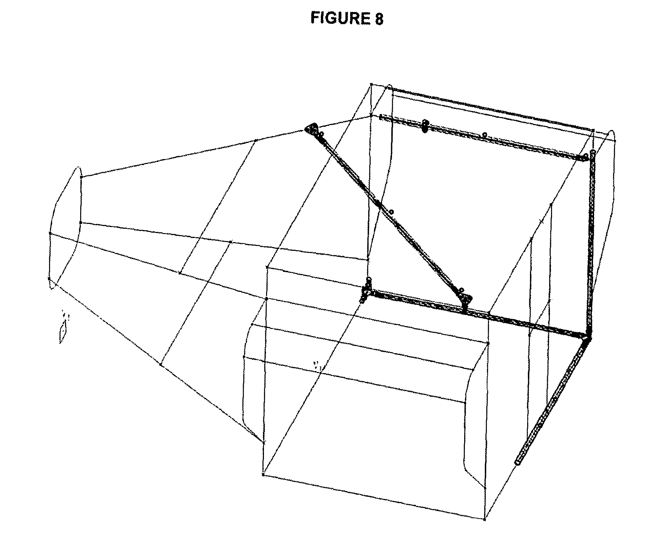

Figure 8 shows a tubular structure in which the tubes are joined by the techniques of the present invention.

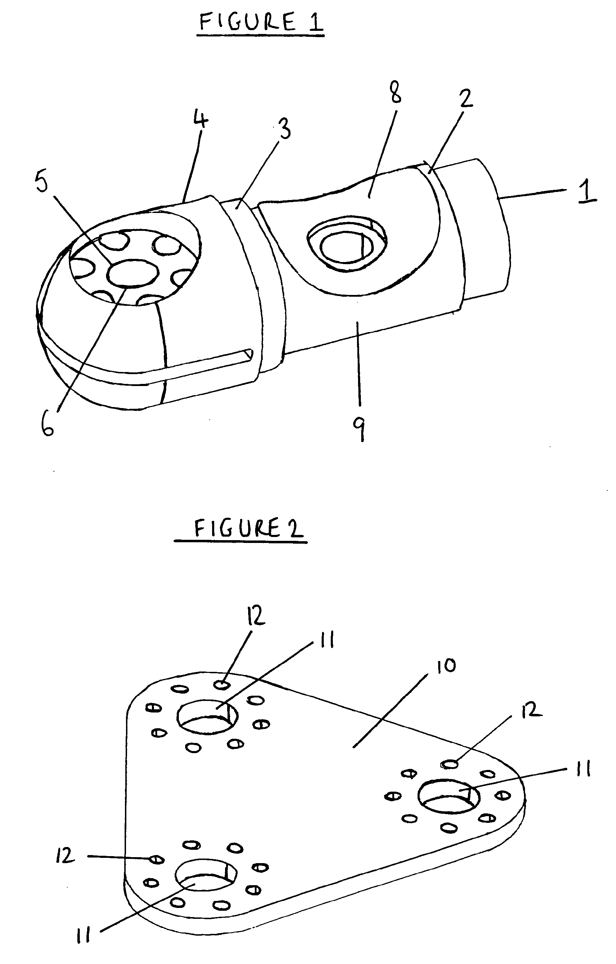

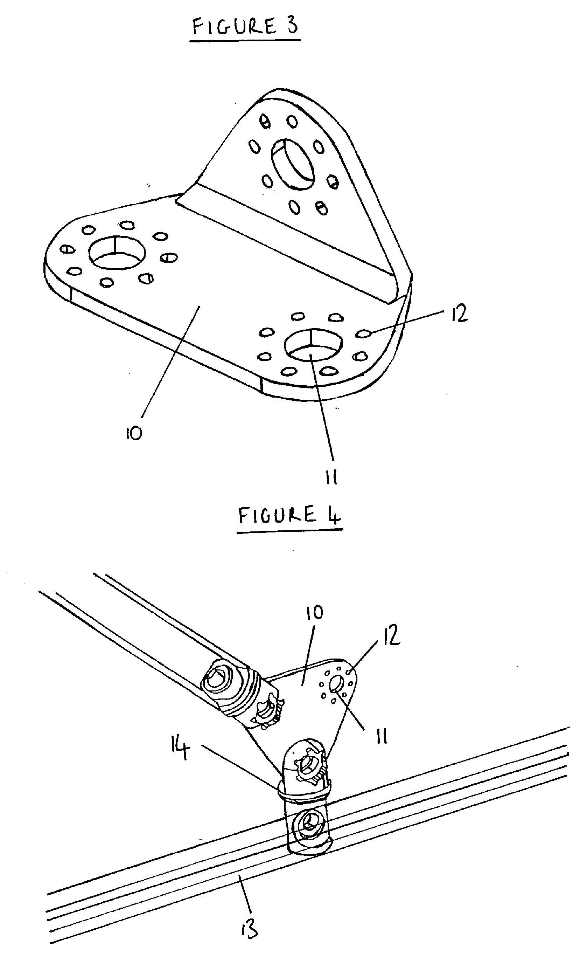

Figure 1 shows a plug with a small diameter end (1) which can be fitted into a tubular structure. The plug is provided with a collar (2) which is of greater diameter than the inner diameter of the tube thus preventing the plug from being inserted too far into the tube. The plug is then provided with a further collar (3) which is of diameter such that it will fit within the outer of the two concentric tubes. The diameter of the plug then further increases to provide a head (4) which will not pass into the outer of the concentric tubes. The head is provided with a central hole (5) surrounded by a ring of holes (6). The head is further provided with a slot (7). Figure 1 also shows the provision of the optional feature that the collar section (2) may be provided with a recessed area (8) to allow the plug to be placed around the outer circumference of another tubular member. Figure 1 further shows the optional provision of a hole (9) within the recess for receipt of a means for attaching the plug to the circumference of another tubular member such as a pin or bolt (not shown).

Figure 2 shows a flat triangular joining piece (10) the triangle being provided at each apex with a hole (11) surrounded by a ring of holes (12). The joining piece (10) is of a thickness that it can slide into the slot (7) provided in the plug as shown in Figure 1. One apex of the joining piece (10) can therefore be slid into the slot (7) so that the hole (11) mates with the hole (5) provided in the plug. In this way the plug and joining piece may be rotably attached by, for example, passing a pin through holes (5) and (11). The desired orientation of the plug and thus the tubular structure to which it is attached in relation to the joining piece (10) may then be realised by securing the joint with pins passing through the appropriate mating holes (12) and (6).

Figure 2 shows a joining piece with three joining areas and it will be appreciated that a plug joined to a tubular structure may be joined at each area at the desired orientation thus enabling the development of any desired tubular system.

It will also be appreciated that joining pieces with different numbers of joining areas may be provided as may joining pieces containing joining areas in different planes such as that illustrated in Figure 3.

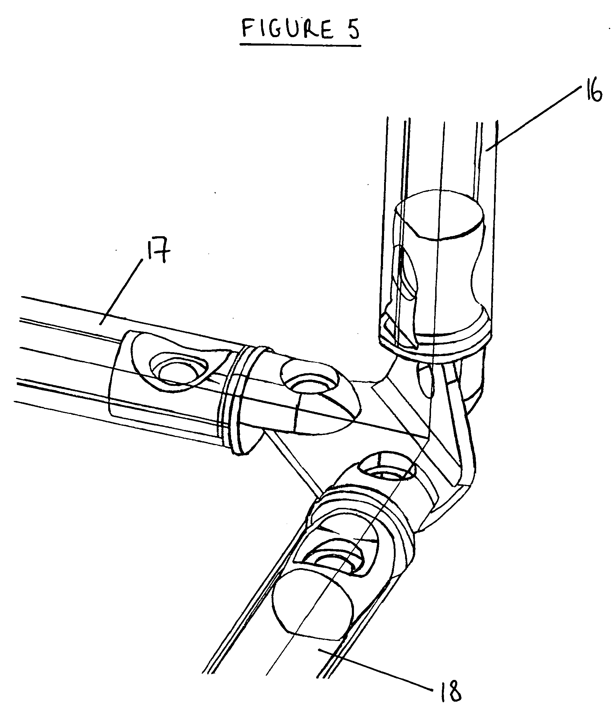

Figure 4 shows how a tube (13) may be attached to a joining piece (10) by means of a plug such as that illustrated in Figure 1 and Figure 4 also shows how a second plug (14) may be attached to the joining piece (10) and by use of the recessed section can pass around another tube (15).

Figure 5 shows how the joining piece of Figure 3 may be used to provide a joint between three tubes (16), (17) and (18). In the embodiment shown in Figure 5 the plugs are different from the plug shown in Figure 1 in that they are not provided with a slot into which the joining areas of (10) can slide but are provided on one side with a flat surface that can mate with the surface of the joining piece (10). This structure will have less rigidity than those in which the plug is provided with the slot.

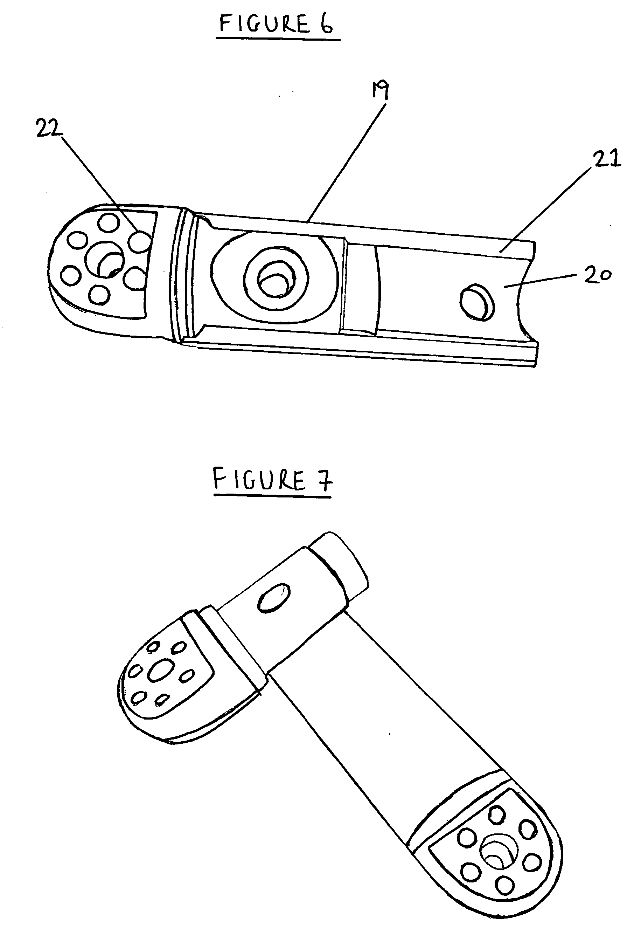

Figure 6 is a cut away view showing a tube consisting of two concentric tubes (19) and (20), the inner tube (20) being shorter than the outer tube (19). A foamable material (21) is positioned between the concentric tubes. A plug (2) such as that illustrated in Figure 1 is shown positioned within the concentric tubes in the position of full insertion. It will be seen firstly that the design of the plug enables the concentric tubes to be held apart by the desired distance, it will also be seen that when the foamable material foams it will contact the plug in the region where there is no inner tube due to it being shorter than the outer tube. Accordingly if the foam develops adhesive properties during foaming such as with an epoxy based foam or a polyurethane based foam the foam will bond to the plug thus securing it rigidly within the concentric tubes.

## Claims

1. A means for joining tubular structures comprising a plug for insertion into the tubular structure provided with a collar to limit the extent to which the plug may be inserted into the tubular structure the plug being provided with a head adapted to be positioned outside of the tubular structure when the plug is inserted within the structure the head being provided with a plurality of holes which can be aligned with corresponding holes in a multi armed joining piece whereby two or more plugs can be connected to two or more arms of the joining piece by the provision of pins through the mating holes to form a joint between two or more tubular structures into which the plugs have been placed.

2. A means according to Claim 1 in which the head is provided with a central hole surrounded by a circle of holes.

3. A means according to Claim 2 in which the circle of holes comprises six equidistant holes.

4. A means according to Claim 2 in which the circle of holes comprises eight equidistant holes.

5. A means according to any of Claims 1 to 4 provided with a slot in the head of the plug.

6. A kit for the assembly of tubular structures comprising two or more plugs according to any of Claims 1 to 5 together with at least one multi armed joining piece provided with holes positioned to mate with holes in the plug.

7. A means according to any of the preceding claims in which the plug is provided with a slot at the end opposite to the end that is to be inserted into the tube and the two limbs that define the slot are provided with the holes.

8. A means according to Claim 7 in which the slot is such that the plug may be slid over an arm of the joining piece so that the arm of the joining piece, provided with holes match the holes provided in the limbs which define the slot in the plug.

9. A means according to any of the preceding Claims in which the plug is provided with a recess on one or both sides the shape of the recess corresponding to the external shape of the tubular structures that are being joined.

10. A means according to any of the preceding claims in which the joining pieces are shaped according to the structure to be produced and contain arms that protrude in the direction in which the tubular structures that are to be joined should extend.

11. A technique according to Claim 10 in which the joining section is flat with two or more extending arms for joining structures that are to lie in the same plane.

12. A technique according to Claim 10 in which the arms of the joining pieces are inclined to each other so that the tubular sections adopt the inclination required in the final structure.

13. A means according to Claim 10 in which the joining piece is provided with three arms two in one plane and the third in the plane vertical to the plane occupied by the other two arms.

14. The use of a means according to any of the preceding claims for joining tubular scaffolding.

15. The use of a means according to any of Claims 1 to 13 for joining tubular materials used in the transport industry.

16. The use of a means according to any of Claims 1 to 13 for joining structures used in light aviation.

17. The use of a joining system according to any of the preceding claims to join laminar tubular structures comprising a sandwich of foam between two concentric tubes.

18. The use according to Claim 17 in which the foam is produced by heating a sandwich structure containing foamable material in the unfoamed state between two concentric tubes and the plug section of the joining piece holds the concentric tubes apart by the distance corresponding to the desired thickness of the foam.

19. The use according to Claim 18 in which the plug is provided with two collars one corresponding to the diameter of the inner of the two concentric tubes and the other corresponding to the diameter of the outer of the two concentric tubes.

20. A process for producing laminar tubular structures comprising foam sandwiched between two concentric tubes wherein heat expandable material is provided between concentric tubes in an unfoamed state and plugs are positioned at each end of the concentric tubes to hold the tubes apart by the distance corresponding to the desired thickness of the foam and the structure is heated to cause foaming.

21. A process according to Claim 20 in which the foam is a reinforcing foam that adds strength to the tubular structure.

22. A process according to Claim 21 in which the foamable material is an epoxy based structural foams which will foam, cure and also adhere to the surfaces of the concentric tubes.

23. A process according to any of Claims 20 to 22 in which the inner tube is shorter than the outer of the concentric tubes to allow direct contact between the plug and the foamable material when the plug is inserted into the tubular structure whereby the adhesive properties of the foamable material as it expands bonds the foam to the plug.
